# EUROPÄISCHE PATENTSCHRIFT

(11) **EP 0 405 567 B1**
(45) Veröffentlichungstag und Bekanntmachung des Hinweises auf die Patenterteilung: **22.09.1993**
(21) Anmeldenummer: 90112393.5
(22) Anmeldetag: 29.06.1990
(51) Int. Cl.: A61C 13/265, A61C 13/277

(54) **Vorrichtung zum Sichern eines herausnehmbaren Zahnprothesenteils an einem festsitzenden Zahnprothesenteil**
Device for securing a removable partial denture to a fixed prosthetic element
Verrou de fixation, de prothèse dentaire partielle amovible, à un élément de prothèse inamovible

(30) Priorität: 30.06.1989 DE 8907997 U; 30.06.1989 DE 8908002 U
(43) Veröffentlichungstag der Anmeldung: 02.01.1991
(73) Patentinhaber: Obersat, Adam, 67618 Kaiserslautern (DE)
(72) Erfinder: Obersat, Adam,, D-6750 Kaiserslautern (DE); Klein, Franz Josef,, D-8944 Grönenbach (DE); Fritzen, Claus-Peter Dr., D-6750 Kaiserslautern (DE)
(74) Vertreter: Bernhardt, Winfrid, Dr.-Ing.

(56) Entgegenhaltungen:
- DE-A- 3 301 182
- DE-U- 8 912 852
- DE-U- 8 914 798
- US-A- 1 688 145

## Beschreibung

Die Erfindung betrifft ein Riegelelement gemäß dem ersten Teil von Anspruch 1.

Aus der EP-A-136 671 und der EP-A-263 235 des Erfinders sind derartige abnehmbare Zahnprothesen bekannt, die in an sich bekannter Weise eine starre, jedoch lösbare Verbindung mit dem festsitzenden Zahnprothesenteil in Form eines Geschiebes haben und darüber hinaus mit einem Riegelelement ausgerüstet sind, welches das Geschiebe in dessen Endstellung zusammenhält. Das Riegelelement wird gebildet durch ein flaches Federelement, das in einem flachen, vorne offenen Kasten geführt ist, der in eines der beiden Zahnprothesenteile eingebaut ist. Die metallische Vorderseite des Federelementes ragt geringfügig aus dem flachen Kasten heraus und rastet in eine am anderen Zahnprothesenteil entsprechend vorgesehene Kerbe ein.

Im Fall der EP-A-136 671 besteht das Federelement aus einem nach Art eines "S" oder einer "5" gebogenen Stück Federdraht. Dadurch können sich Speichel und Speisereste in dem flachen Führungskasten sammeln und dort in Gärung oder Fäulnis übergehen. Eine Reinigung des Führungskastens ist wegen der extrem kleinen Abmessungen nur nach Herausnahme des Federelementes und auch dann nur unter Schwierigkeiten möglich. Vom Träger der Prothese selber ist eine Reinigung praktisch nicht durchführbar.

Aus u.a. diesem Grunde wird in de EP-A-263 235 vorgeschlagen, das Federelement als einen den Führungskasten praktisch ganz ausfüllenden Klotz aus Silikonkautschuk auszubilden und an dessen Vorderseite ein abriebfestes Metallteil als Riegelelement zu fixieren. Dadurch ist das Eindringen von Speichel und Speiseresten in den flachen Führungskasten stark reduziert. Die Federungseigenschaften, die Lebensdauer und die hygienischen Eigenschaften dieses Federelementes selbst sind allerdings weniger gut. Um diese Mängel wenigstens teilweise wieder auszugleichen, schlägt die EP-A-263 235 ferner vor, das in die gegenüberliegende Kerbe einrastende Metallteil als drehbar an ihren Enden gelagerte Metallwalze auszubilden. Die Verwendung eines rollenden Elementes an dieser Stelle reduziert die Reibung und ermöglicht grundsätzlich eine exaktere Einstellung der Halte- und Lösekräfte. In der Praxis ließ sich diese Bauart jedoch nicht realisieren.

Der Erfindung liegt die Aufgabe zugrunde, eine Verriegelungsvorrichtung zu schaffen, die funktionssicher, einfach und kostengünstig ist und vorzugsweise ferner Speichel und Speiseresten praktisch keine Möglichkeit bietet, sich festzusetzen, und möglichst vom Träger der Prothese selbst gereinigt werden kann.

Diese Aufgabe wird nach der Erfindung durch eine gattungsgemäße Vorrichtung gelöst, bei der das Riegelelement eine hohle Rolle auf einer Achse von der Form mindestens eines Abschnittes eines federnden Drahtbügels aufweist.

Die auf einem Drahtbügel als Achse gelagerte hohle Rolle stellt eine einfache und kostengünstige, praktisch auch durchführbare Maßnahme zur Verminderung der Reibung beim Einsetzen und Herausnehmen des abnehmbaren Zahnprothesenteils dar. Sie verlegt in dem nach Möglichkeit realisierten Falle, daß sich das Riegelelement an dem herausnehmbaren Zahnprothesenteil befindet, einen großen Teil der Abnutzung von dem festsitzenden auf das herausnehmbare Zahnprothesenteil, wo einfacher Ersatz möglich ist. Etwa in den inneren Hohlraum der Rolle eingedrungene Speisereste können hier durch einfaches Drehen derselben gelockert und anschließend mit Wasser oder Luft ausgespült werden. Das Riegelelement mit der Rolle erleichtert es auch, definierte Halte- und Lösekräfte einzustellen.

Die Rolle könnte die Form einer Tonne oder eines Kugelabschnittes o.ä. haben. Vorzugsweise ist sie jedoch ein Zylinder, der einfach nur von einem, etwa an sich zu anderen Zwecken hergestellten, Röhrchen abgeschnitten zu werden braucht.

Die Federung des mit der Rolle versehenen Riegelelementes kann an sich beliebig sein. Sie könnte beispielsweise aus einer herkömmlichen Schraubenfeder bestehen, die auf den Bügel wirkt oder ein als der Bügel gestaltetes Ende aufweist.

Als besondere Ausgetaltung der Erfindung wird jedoch vorgeschlagen, daß der Drahtbügel selbst federnd ist und seine beiden Enden an dem einen Zahnprothesenteil verankert sind.

Der federnde Drahtbügel kann sich bei geeigneter Ausbildung nicht nur in einer, sondern in zwei Ebenen federnd verformen, wodurch der Federeffekt vergrößert wird.

Das Bauvolumen kann sehr gering gehalten werden.

Das Riegelelement kann auch noch nachträglich an dem Zahnprothesenteil befestigt werden. Dadurch ist es möglich, die Zahnprothese zunächst ohne Berücksichtigung des Riegelelementes fertigzustellen, wodurch die Arbeitsgänge vereinfacht werden, und auch ältere Prothesen können problemlos nachgerüstet werden.

Andererseits kann das Riegelelement in besonders vorteilhafter Weise, vor allem besonders exakt, an industriell vorgefertigten Verbindungen angebracht sein, insbesondere Geschieben.

Vorzugsweise sind die Enden des Drahtbügels an dem Zahnprothesenteil bzw. dem Teil der Verbindung materialschlüssig befestigt. Material schlüssige Verbindungen sind Löten und Schweißen, aber auch das Einschmelzen oder Einzementieren.

Um den Halt zu verbessern, können die Enden des Drahtbügels mit widerhakenartigen Retentionsmitteln versehen sein.

Es ist auch möglich, die Enden des Drahtbügels in taschenförmige Sackbohrungen lösbar einzustecken. Ob der Drahtbügel lösbar oder unlösbar befestigt wird, hängt vom jeweiligen Einsatzfall ab.

Gemäß einer Weiterbildung der Erfindung sind die beiden Enden des Drahtbügels in einem elastisch nachgiebigen Material verankert, insbesondere in Form einer Montage-Baueinheit. Dadurch wird einer möglichen Bruchgefahr an den Einführstellen des Drahtbügels vorgebeugt. Außerdem werden Federweg und Federcharakteristik verbessert.

Zweckmäßigerweise ist das Riegelement am unteren Ende des, abnehmbaren, Patrizen-Teils der Verbindung angeordnet, während das Matrizen-Teil die Kerbe trägt. Dies gilt, ob es sich um eine industriell vorgefertigte Verbindung oder ob es sich um eine individuell gefertigte Verbindung - Rillen-Schulter-Geschiebe oder teleskopierende Krone - handelt.

Hinsichtlich der Form des Drahtbügels und seiner Stellung an dem Teil der Verbindung bestehen verschiedene Möglichkeiten:

Der Drahtbügel kann eine Ausbildung und Anordnung derart aufweisen, daß beim Ineinanderschieben der Verbindung der Bogen zurückgedrückt und abgeflacht wird.
Dabei kann der Drahtbügel auch innerhalb der, einen entsprechend großen Innendurchmesser aufweisenden, Rolle bogenförmig ausgebildet sein.

Zusätzlich zu dem Zurückdrücken kann eine weitere Biegung in der Weise vorgesehen werden, daß die Rolle entgegen der Einschubrichtung der Verbindung ausweicht.

Als besondere vorteilhafte Weiterbildung der Erfindung wird jedoch vorgeschlagen, daß der Drahtbügel beiderseits der Rolle abgewinkelte Schenkel aufweist in einer Ausrichtung parallel und/oder schräg zur Einschubrichtung der Verbindung derart, daß die Schenkel beim Ineinanderschieben der Verbindung als Biegefedern zurückgebogen werden.
Damit läßt sich eine sehr viel weichere Federkennlinie einrichten.

Noch einmal verbessert werden kann die Federwirkung dann durch die weitere Ausgestaltung der Erfindung, daß die Schenkel im Anschluß an ihre parallele oder schräge Ausrichtung zur Einschubrichtung in eine Richtung rechtwinklig oder schräg zur Einschubrichtung, vorzugsweise aufeinander zu, abgebogen sind derart, daß die solchermaßen abgebogenen Abschnitte beim Zurückdrücken des Federelementes als Torsionsfedern gedreht werden.

Anhand von Ausführungsbeispielen soll die Erfindung näher erläutert werden. In der Zeichnung zeigen
- Fig. 1: die Patrize eines Geschiebes mit einem erfindungsgemäßen Riegelelement in Seitenansicht,
- Fig. 2: die Matrize des Geschiebes in Seitenansicht, teilweise aufgebrochen,
- Fig. 3: die Patrize der Fig. 1 in Bodenansicht, teilweise aufgebrochen,
- Fig. 4: eine erste Variante der Patrize in Fig. 3,
- Fig. 5: eine zweite Variante der Patrize in Fig. 3,
- Fig. 6: die Patrize eines Geschiebes mit einem anderen erfindungsgemäßen Riegelelement in Seitenansicht,
- Fig. 7: die Patrize eines Geschiebes mit einer Variante des Riegelelementes nach Fig. 6 in Seitenansicht, teilweise aufgebrochen,
- Fig. 8: einen Schnitt nach Linie VIII-VIII in Fig. 7,
- Fig. 9: ein weiteres erfindungsgemäßes Riegelelement in Draufsicht,
- Fig. 10: ein Gehäuse für das Riegelelement nach Fig. 9 links in Draufsicht, rechts im Schnitt und
- Fig. 11: das Gehäuse nach Fig. 10 in einem zu Fig. 10 senkrechten Längsschnitt.

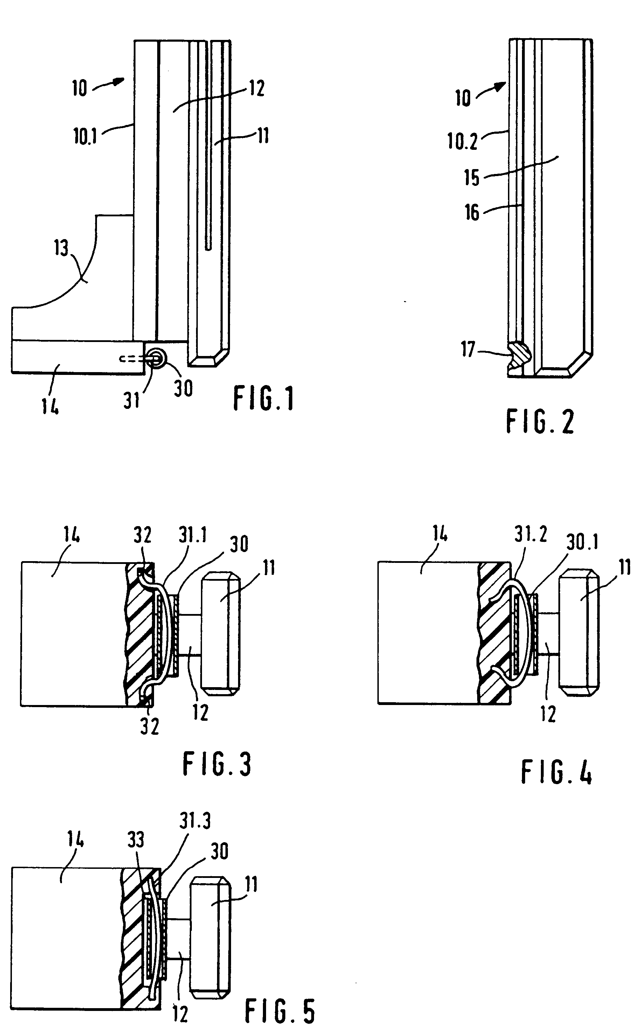

Die Fig. 1 und 2 zeigen als Seitenansichten ein handelsüblich vorgefertigtes Geschiebe als Verbindungsstruktur 10 zwischen einem abnehmbaren und einem festsitzenden Zahnprothesenteil.

Die in Fig. 1 dargestellte Patrize 10.1 besitzt eine federnd geschlitzte Feder 11 mit einem Verbindungssteg 12 an der Rückseite. Die in Fig. 2 dargestellte Matrize 10.2 besitzt im wesentlichen eine Nut 15, die an die Feder 11 angepaßt ist, und eine schlitzartige Öffnung 16, die an den Verbindungssteg 12 angepaßt ist. Durch Einschieben der Feder 11 in die Nut 15 wird eine starre, jedoch lösbare Verbindung zwischen der Patrize 10.1 und der Matrize 10.2 bzw. den daran befestigten, in der Zeichnung nicht dargestellten Zahnprothesenteilen bewirkt.

Um zwischen den beiden Geschiebeteilen 10.1, 10.2 bzw. den Zahnprothesenteilen definierte Halte- und Lösekräfte zu erzeugen, ist am Boden der Patrize 10.1 mit Hilfe eines Verstärkungsspants 12 ein Montagemodul 14 angebracht. An der Stirnseite des Montagemoduls 14 ist mit Hilfe einer Achse 31 in Form eines federnd gebogenen Drahtstückes ein Hohlzylinder 30 als Riegelelement montiert. Der Hohlzylinder 30 rastet in der Endstellung von Patrize 10.1 und Matrize 10.2 in eine an der Matrize 10.2 vorgesehene Rastkerbe 17 ein. Dank der Rollenlagerung sind die Reibungskräfte minimal; die Halte- und Lösekräfte sind somit nur noch abhängig von den Abmessungen des Hohlzylinders 30 und der Rastkerbe 17 sowie der Federkraft der Achse 31.

Obwohl die Achse 31 nur relativ kurz ist, entstehen keine Probleme mit dem Federweg, da die Rolle 30 nicht nur nach vorne und nach hinten, sondern auch nach oben und nach unten federn kann.

Die Fig. 3 bis 5 zeigen, daß die Enden der Achse 31 auf unterschiedliche Arten befestigt werden können.

Das Ausführungsbeispiel der Fig. 3 zeigt als Beispiel für eine formschlüssige Verbindung taschenförmige Sackbohrungen 32 in der Stirnfläche der Montageplatte 14, in die die Enden der Achse 31 lösbar eingesteckt sind.

Die Ausführungsbeispiele der Fig. 4 und 5 zeigen als Beispiel für eine materialschlüssige Verbindung, daß die Enden der Achse 31.2, 31.3 in die Montageplatte 14 eingegossen bzw. eingeschmolzen werden können.

Fig. 4 zeigt eine Ausführungsform, bei der das Riegelelement 30.1 als Tonne geformt ist. In Spezialfällen kann das Riegelelement auch als Kugelabschnitt geformt sein. Auch kann das Montagemodul 14 aus einem elastisch-nachgiebigen Material bestehen, um einer etwaigen Bruchgefahr der Achse 31 an den Einführungsstellen vorzubeugen und um die Federung zu beeinflussen.

Fig. 5 schließlich zeigt eine Ausführungsform, bei der die hohlzylindrische Rolle 30 teilweise in einer Vertiefung 33 liegt. Dadurch kann der Gefahr vorgebeugt werden, daß sich der Prothesenträger beim Einsetzen der Prothese verletzt oder daß bei der Reinigung der Prothese das Riegelelement 30,31 versehentlich beschädigt wird.

Anstelle der in den Fig. 3 bis 5 dargestellten Verformung der Enden der Achse 31 können die Achsenenden auch mit widerhakenähnlichen Retentionsmitteln ausgerüstet werden.

Es versteht sich weiterhin, daß das Riegelelement 30, 31 auch ohne besonderes Montagemodul 14 direkt unter der Patrize 10 oder an dem in der Zeichnung nicht dargestellten Zahnprothesenteil selbst montiert werden kann, z.B. wenn bei der Fertigung der Zahnprothese vorgefertigte Geschiebe nicht verwendet werden.

In allen Fällen ist eine optimale Hygiene gewährleistet. Speichel oder Speisereste, die in die Innenbohrung des Rotationskörpers 30, 30.1 eingedrungen sind, können wenn nötig durch Drehen und Bewegen des Rotationskörpers 30, 30.1 gelockert und anschließend mit einem Luft- oder Wasserstrahl entfernt werden.

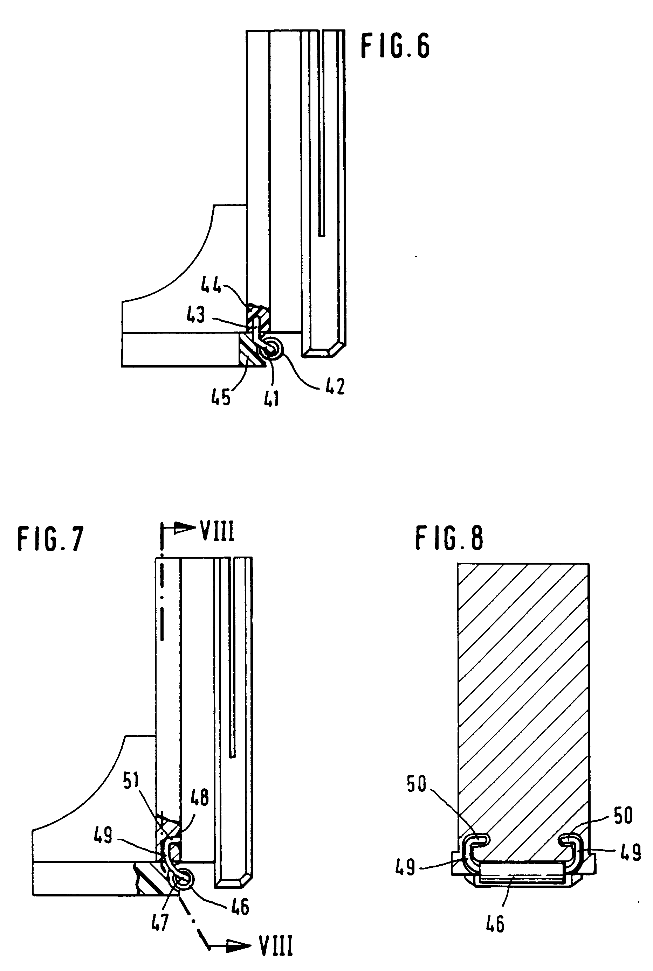

Die Patrize nach Fig. 6 ist die gleiche wie nach Fig. 1 und auch zusammengehörig mit der Matrize nach Fig. 2, jedoch sind die Achse 31 und der Hohlzylinder 30 ersetzt durch einen Drahtbügel 41 und eine Rolle 42, gleichfalls von der Form eines Hohlzylinders.
Der Bügel 41 trägt die Rolle 42 auf einem geraden mittleren Abschnitt, an den sich zwei um 90° abgewinkelte Schenkel 43 anschließen. Da der mittlere Abschnitt gerade ist, könnte die Rolle 42 einen kleineren, dem Drahtdurchmesser angepaßten Innendurchmesser haben und dementsprechend auch einen kleineren Außendurchmesser. Die Schenkel 43 sind an ihren freien Enden wiederum um 90° nach innen abgebogen, also parallel zu dem die Rolle tragenden mittleren Abschnitt des Drahtbügels; die abgebogenen Enden sind in einer Masse 44 verankert.

Die Masse 44 kann ein Lot oder eine starre Kunstharzmasse sein, aber auch eine elastische Masse. Insbesondere im letzteren Falle sind die Enden des Drahtbügels zweckmäßigerweise innerhalb der Masse noch einmal abgewinkelt.
Hinter der Rolle 42 ist bin elastisches Kissen 45 eingesetzt, dessen Vorderseite der Rolle 42 eine konkave Anlagefläche bietet.

Wird die Patrize gemäß Fig. 6 in die Matrize gemäß Fig. 2 eingeschoben, so wird die Rolle 42 durch die leicht schräge Vorderfläche der Matrize fortschreitend zurückgedrückt, bis sie in die Rastkerbe 17 einfedert.
Beim Zurückdrücken der Rolle 42 wirken die Schenkel 43 des Drahtbügels als Biegefedern. Ist die Masse 44 eine elastische, dann übernimmt sie noch eine weitere Federung.

Das elastische Kissen 45 verstärkt nach der Anlage der Rolle an seiner eingewölbten Vorderfläche auf dem letzten Stück der Auslenkung die elastische Gegenkraft.

Die Patrize nach Fig. 7 und 8 weist einen ebenso wie der Drahtbügel 41 im ganzen U-förmigen, mit einer Rolle 46 besetzten Drahtbügel 47 auf. Dieser ist jedoch bei 48 angeschweißt. Von seinen Schenkeln 49 führen wiederum abgewinkelte Abschnitte 50 nach innen (Fig. 8), von diesen Abwinkelungen 51 nach vorne zu der Schweißung 48 (Fig. 7). Die Schenkel 49 sind, anders als die leicht geknickten Schenkel 43, gebogen. Sie könnten aber auch gerade sein.
Der mittlere Abschnitt des Drahtbügels 47 könnte, wie übrigens auch derjenige des Drahtbügels 41, statt gerade etwas gewölbt sein.

Wird die Patrize gemäß Fig. 7 und 8 in die Matrize eingeschoben, so tritt zu der Wirkung der Schenkel 49 als Biegefedern eine Wirkung der Abschnitte 50 als Torsionsfedern hinzu.

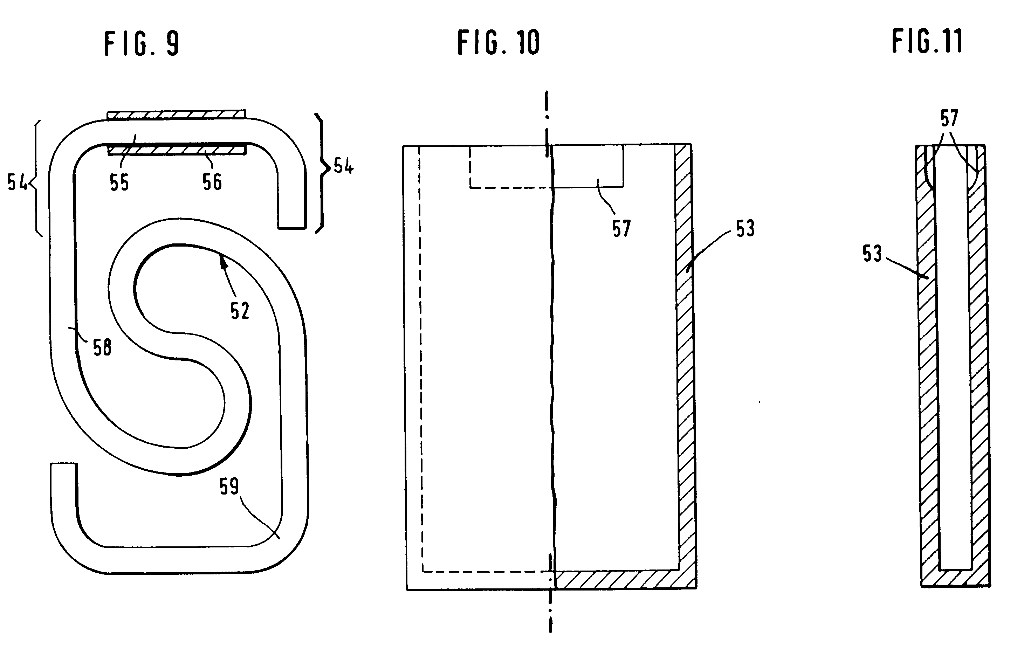

Der Riegel nach Fig. 9 entspricht in seinem Grundaufbau demjenigen nach der EP-A-136 671, auf die ergänzend verwiesen sei. Er besteht aus einer innerhalb einer Ebene gebogenen Feder 52, die in einem Gehäuse 53 unterzubringen ist, wobei sie noch einmal in einem nicht dargestellten Kissen liegt. Im ungespannten Zustand ragt ein einen vorderen Teil der Feder 2 bildender Bügel 54, der auf einem geraden Abschnitt 55 eine Rolle 56 trägt, mit dieser aus dem Gehäuse 53 heraus. Wird die Rolle unter Anspannung der Feder 52 zurückgedrückt, findet sie Platz in einer Ausfräsung 57 der Gehäusewandung. Die Feder 52 hat in symmetrischer Gestaltung zwischen dem Bügel 54, an den sich ein seitlicher Balken 58 anschließt, und einem an der Rückwand des Gehäuses 53 abgestützten Gegenstück 59 zu dem Bügel und dem Balken die Form eines S. Sie bildet zusammen mit der Rolle 56 ein Riegelelement mit einer weichen Federkennlinie und einer besonders genau und sicher definierten zum Ausrasten erforderlichen Kraft.

Die Feder 52 ist als solche neu und auch ohne Rolle und in allgemeinem Umfang für Riegel geeignet.

## Patentansprüche

1. Riegelelement zum Sichern eines herausnehmbaren Zahnprothesenteils an einem festsitzenden Zahnprothesenteil in einer Verbindung (10) der beiden Zahnprothesenteile, in der die beiden Zahnprothesenteile ineinanderschiebbar und in der Endstellung starr, aber lösbar zusammengesetzt sind und wobei die Zahnprothesenteile mittels des, gegen das herausnehmbare oder gegen das festsitzende Zahnprothesenteil abgestützten und in eine Kerbe (17) des festsitzenden bzw. des herausnehmbaren Zahnprothesenteils federnd einrastenden Riegelelementes gesichert sind,
dadurch gekennzeichnet,
daß das Riegelelement eine hohle Rolle (30;42;46;56) auf einer Achse von der form mindestens eines Abschnitts eines Drahtbügels (31;41;47;54) aufweist.

2. Riegelelement nach Anspruch 1,
dadurch gekennzeichnet,
daß die Rolle (30;42;46;56) eine Tonne oder ein Kugelabschnitt oder, vorzugsweise, ein Zylinder (30;42;46;56) ist.

3. Riegelelement nach Anspruch 1 oder 2,
dadurch gekennzeichnet,
daß der Drahtbügel (31;41;47) selbst federnd ist und seine beiden Enden an dem herausnehmbaren bzw. dem festsitzenden Zahnprothesenteil verankert sind.

4. Riegelelement nach einem der Ansprüche 1 bis 3,
dadurch gekennzeichnet,
daß es an dem herausnehmbaren bzw. dem festsitzenden Teil (10.1) einer vorgefertigten Verbindung (10), insbesondere eines Geschiebes (10), angeordnet ist und an dem festsitzenden bzw. dem herausnehmbaren Teil (10.2) die Kerbe (17) angeordnet ist.

5. Riegelelement nach Anspruch 3 oder 4,
dadurch gekennzeichnet,
daß die Enden des Drahtbügels (31) an dem Zahnprothesenteil bzw. dem Teil der Verbindung (10) materialschlüssig befestigt sind.

6. Riegelelement nach Anspruch 3 oder 4,
dadurch gekennzeichnet,
daß die Enden des Drahtbügels (31) in taschenförmige Sackbohrungen (32) lösbar eingesteckt sind.

7. Riegelelement nach Anspruch 3 oder 4,
dadurch gekennzeichnet,
daß die Enden des Drahtbügels (31;41;47) in einem elastischnachgiebigen Material verankert sind, insbesondere in Form einer Montage-Baueinheit (14).

8. Riegelelement nach einem der Ansprüche 3 bis 7,
dadurch gekennzeichnet,
daß die Enden des Drahtbügels (31) mit widerhakenartigen Retentionsmitteln versehen sind.

9. Riegelelement nach einem der Ansprüche 1 bis 8,
dadurch gekennzeichnet,
daß das Riegelelement (30,31;41,42;46,47) am unteren Ende des abnehmbaren Teils, vorzugsweise zugleich des Patrizen-Teils, einer individuell gefertigen Verbindungskonstruktion (10) - Rillen-Schulter-Geschiebe und teleskopierende Kronen - bzw. einer vorgefertigten Verbindung (10) angeordnet ist.

10. Riegelelement nach einem der Ansprüche 3 bis 9,
gekennzeichnet durch eine Anordnung und bogenförmige Ausbildung des Drahtbügels (31) derart, daß beim Ineinanderschieben der Verbindung der Bogen zurückgedrückt und abgeflacht wird.

11. Riegelelement nach Anspruch 10,
dadurch gekennzeichnet,
daß der Drahtbügel (31) innerhalb der, einen entsprechend großen Innendurchmesser aufweisenden, Rolle (30) bogenförmig ausgebildet ist.

12. Riegelelement nach einem der Ansprüche 3 bis 9,
dadurch gekennzeichnet,
daß der Drahtbügel (41;47) beiderseits der Rolle (42;46) abgewinkelte Schenkel (43;49) aufweist in einer Ausrichtung parallel und/oder schräg zur Einschubrichtung der Verbindung derart, daß die Schenkel (43;49) beim Ineinanderschieben der Verbindung als Biegefedern zurückgebogen werden.

13. Riegelelement nach Anspruch 12,
dadurch gekennzeichnet,
daß die Schenkel (49) im Anschluß an ihre parallele oder schräge Ausrichtung zur Einschubrichtung in eine Richtung rechtwinklig oder schräg zur Einschubrichtung, vorzugsweise aufeinander zu, abgebogen sind derart, daß die solchermaßen abgebogenen Abschnitte (50) beim Zurückdrücken des Federelementes (46,47) als Torsionsfedern gedreht werden.

14. Riegelelement nach Anspruch 1 oder 2,
dadurch gekennzeichnet,
daß der Drahtbügel (54) vorderer Teil einer innerhalb einer Ebene mindestens U-förmig gebogenen, in einem flachen Gehäuse (53) geführten FEder (52) ist.

15. Riegelelement nach Anspruch 14,
dadurch gekennzeichnet,
daß die Feder (52) einen im ganzen rechteckigen Umriß aufweist, wobei der Drahtbügel (54) im Anschluß an seinen, vorzugsweise geraden, die Rolle (56) tragenden Abschnitt (55) zwei zueinander parallele, vorzugsweise zu dem Abschnitt (55) rechtwinklig, abgebogene Abschnitte aufweist, an deren einen sich, vorzugsweise mit einer geraden Verlängerung (58) des Abschnittes, die übrige Feder anschließt, die einen etwa gleich und als Gegenstück (59) zu dem Drahtbügel (54) ausgebildeten rückwärtigen Teil und zwischen diesem und dem Drahtbügel (54) einen S-förmigen Teil aufweist.

## Claims

1. Locking element for securing a removable dental prosthesis part to a fixed dental prosthesis part in a connection (10) of the two dental prosthesis parts, in which connection the two dental prosthesis parts can be slid one inside the other and are rigid in the end position, yet detachably assembled, and the dental prosthesis parts being secured by means of-the locking element, which is supported against the removable or against the fixed dental prosthesis part and engages resiliently into a notch (17) in the fixed or removable dental prosthesis part, characterised in that the locking element exhibits a hollow roller (30;42;46;56) on an axle in the shape of at least one section of a wire bow (31;41;47;54).

2. Locking element according to Claim 1, characterised in that the roller (30;42;46;56) is a barrel or spherical segment or, preferably, a cylinder (30;42;46;56).

3. Locking element according to Claim 1 or 2, characterised in that the wire bow (31;41;47) is itself resilient and its two ends are anchored to the removable or fixed dental prosthesis part.

4. Locking element according to one of Claims 1 to 3, characterised in that it is disposed on the removable or fixed part (10.1) of a prefabricated connection (10), in particular of a slide fitting (10), and on the fixed or removable part (10.2) there is disposed the notch (17).

5. Locking element according to Claim 3 or 4, characterised in that the ends of the wire bow (31) are fastened to the dental prosthesis part or to the part of the connection (10) in an integral manner.

6. Locking element according to Claim 3 or 4, characterised in that the ends of the wire bow (31) are detachably inserted into pocket-shaped blind bores (32).

7. Locking element according to Claim 3 or 4, characterised in that the ends of the wire bow (31;41;47) are anchored in an elastically pliable material, in particular in the form of an assembly module (14).

8. Locking element according to one of Claims 3 to 7, characterised in that the ends of the wire bow (31) are provided with barb-like retention means.

9. Locking element according to one of Claims 1 to 8, characterised in that the locking element (30,31;41,42;46,47) is disposed at the lower end of the removable part, preferably, at the same time, the male mould part, of an individually produced connecting structure (10) - groove-shoulder-slide fitting and telescopic crowns - or of a prefabricated connection (10).

10. Locking element according to one of Claims 3 to 9, characterised by an arrangement and arc-shaped configuration of the wire bow (31) such that, when the connection is telescopically joined, the arc is pressed down and flattened.

11. Locking element according to Claim 10, characterised in that the wire bow (31), within the roller (30) exhibiting a correspondingly sized inner diameter, is of arc-shaped configuration.

12. Locking element according to one of Claims 3 to 9, characterised in that the wire bow (41;47) exhibits, on both sides of the roller (42;46), angled-off legs (43;49), in an alignment parallel to and/or oblique to the direction of insertion of the connection, such that the legs (43;49), when the connection is telescopically joined, are bent back in the style of bending springs.

13. Locking element according to Claim 12, characterised in that the legs (49), adjoining their parallel or oblique alignment to the direction of insertion, are bent off in a direction at right-angles or oblique to the direction of insertion, preferably approaching each other, such that those sections (50) which are bent off to this extent are turned, when the spring element (46,47) is pressed back, in the style of torsion springs.

14. Locking element according to Claim 1 or 2, characterised in that the wire bow (54) is the front part of a spring (52) which, in one plane at least, is bent in a U-shape and is guided in a flat housing (53).

15. Locking element according to Claim 14, characterised in that the spring (52) has a fully rectangular contour, the wire bow (54) exhibiting, adjoining its preferably straight section (55) supporting the roller (56), two mutually parallel sections, which are bent off preferably at right-angles to the section (55) and one of which is adjoined, preferably with a straight extension (58) of the section, by the other spring, which exhibits a rearward part which is configured approximately identically and as a counterpart (59) to the wire bow (54), and exhibits, between the said rearward part and the wire bow (54), an S-shaped part.

## Revendications

1. Elément de verrouillage pour fixer un élément de prothèse dentaire amovible sur un élément de prothèse dentaire inamovible formant un assemblage (10) des deux éléments de prothèse dentaire, dans lequel les deux éléments de prothèse dentaire sont télescopiques et assemblés de manière à être immobiles en la position extrême tout en étant amovibles et les éléments de prothèse dentaire étant fixés au moyen de l'élément de verrouillage qui s'appuie contre l'élément de prothèse dentaire amovible ou contre l'élément de prothèse dentaire inamovible et qui s'encliquette par effet de ressort dans une rainure (17) de l'élément de prothèse dentaire inamovible ou amovible, caractérisé en ce que l'élément de verrouillage présente un rouleau creux (30; 42; 46; 52) sur un axe du forme d'au moins une partie d'un étrier de fil (31; 41; 47; 54).

2. Elément de verrouillage selon la revendication 1, caractérisé en ce que le rouleau (30; 42; 46; 56) est un tonneau ou un segment sphérique ou, de préférence, un cylindre (30; 42; 46; 56).

3. Elément de verrouillage selon la revendication 1 ou 2, caractérisé en ce que l'étrier de fil (31; 41; 47) est un ressort en lui-même et en ce que ses deux extrémités sont fixées sur l'élément de prothèse dentaire amovible ou sur l'élément de prothèse dentaire inamovible.

4. Elément de verrouillage selon une quelconque des revendications 1 à 3, caractérisé en ce que ledit élément est disposé sur la partie (10.1) amovible ou la partie inamovible d'un assemblage (10) préfabriqué, en particulier une coulisse (10), et en ce que la rainure (17) se trouve dans la partie inamovible ou amovible (10.2).

5. Elément de verrouillage selon la revendication 3 ou 4, caractérisé en ce que les extrémités de l'étrier de fil (31) sont fixées par assemblage de matériaux sur l'élément de prothèse dentaire ou sur la partie de l'assemblage (10).

6. Elément de verrouillage selon la revendication 3 ou 4, caractérisé en ce que les extrémités de l'étrier de fil (31) sont introduites de manière amovible dans des trous borgnes (32) en forme de sac.

7. Elément de verrouillage selon la revendication 3 ou 4, caractérisé en ce que les extrémités de l'étrier de fil (31; 41; 47) sont fixées dans un matériau élastique, en particulier sous forme d'un ensemble de montage (14).

8. Elément de verrouillage selon une quelconque des revendications 3 à 7, caractérisé en ce que les extrémités de l'étrier de fil (31) sont pourvues de dispositifs de rétention de type barbelé.

9. Elément de verrouillage selon une quelconque des revendications 1 à 8, caractérisé en ce que l'élément de verrouillage (30, 31; 41, 42; 46, 47) est disposé en l'extrémité inférieure de la partie amovible, qui est de préférence également la partie poinçon, d'une construction d'assemblage (10) fabriquée individuellement - des coulisses à rainures et épaulements et des couronnes télescopiques - ou d'un assemblage préfabriqué (10).

10. Elément de verrouillage selon une quelconque des revendications 3 à 9, caractérisé par une disposition et une exécution en forme d'arc de l'étrier de fil (31) de telle manière que lorsqu'on fait coulisser l'assemblage, l'arc est comprimé et aplati.

11. Elément selon la revendication 10, caractérisé en ce que l'étrier de fil (31) a la forme d'un arc dans le rouleau (30) qui présente un diamètre intérieur de taille correspondante.

12. Elément de verrouillage selon une quelconque des revendications 3 à 9, caractérisé en ce que l'étrier de fil (41; 47) présente des deux côtés du rouleau (42; 46) des branches (43, 49) pliées dans un alignement parallèle et/ou incliné par rapport à la direction de glissement de l'assemblage de telle manière que les branches (43; 49) sont repliées comme des ressorts pliants lorsqu'on fait coulisser l'assemblage.

13. Elément de verrouillage selon la revendication 12, caractérisé en ce que les branches (49) sont pliées, après leur alignement parallèle ou inclinée par rapport à la direction de glissement, dans une direction à angle droit ou en s'inclinant par rapport à la direction de glissement, de préférence l'une vers l'autre, de telle manière que les parties (50) ainsi pliées sont tournées comme des ressorts à torsion lorsqu'on repousse l'élément à ressort (46, 47).

14. Elément de verrouillage selon la revendication 1 ou 2, caractérisé en ce que l'étrier de fil (54) est la partie frontal un ressort (52) guidé dans un bâti (53) plat et au moins plié en forme de U dans un plan.

15. Elément selon la revendication 14, caractérisé en ce que le ressort (52) présente un contour global rectangulaire, l'étrier de fil (54) présentant deux segments pliés, parallèles l'un par rapport à l'autre, de préférence perpendiculaires par rapport au segment (55), raccordés au segment (55), de préférence droit, supportant le rouleau (56), auxquels est relié l'autre ressort, de préférence via une rallonge (58) droite du l'un segment plies, ledit ressort présentant une partie arrière exécutée de manière environ semblable et comme pendant (59) de l'étrier de fil (54) et formant entre celle-ci et l'étrier (54) une partie en forme de S.
